(19) Europäisches Patentamt
European Patent Office
Office européen des brevets

(11) **EP 3 467 722 B1**

(12) **EUROPÄISCHE PATENTSCHRIFT**

(45) Veröffentlichungstag und Bekanntmachung des Hinweises auf die Patenterteilung:
**08.09.2021 Patentblatt 2021/36**

(51) Int Cl.:
**G06N 3/04** (2006.01) **G06N 3/08** (2006.01)
**G06N 3/00** (2006.01)

(21) Anmeldenummer: **18195675.6**

(22) Anmeldetag: **20.09.2018**

(54) **KONFIGURATION EINER KRAFTFAHRZEUG-FAHRERASSISTENZVORRICHTUNG MIT EINEM NEURONALEN NETZWERK IM LAUFENDEN BETRIEB**

CONFIGURATION OF A MOTOR VEHICLE DRIVER ASSISTING DEVICE USING A NEURAL NETWORK IN ONGOING OPERATION

CONFIGURATION D'UN DISPOSITIF D'AIDE À LA CONDUITE D'UN VÉHICULE AUTOMOBILE DOTÉ D'UN RÉSEAU NEURONAL EN FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2017 DE 102017123205**

(43) Veröffentlichungstag der Anmeldung:
**10.04.2019 Patentblatt 2019/15**

(73) Patentinhaber: **Valeo Schalter und Sensoren GmbH**
**74321 Bietigheim-Bissingen (DE)**

(72) Erfinder: **El-Sallab, Ahmad**
**Giza, Cairo (EG)**

(74) Vertreter: **Withopf, Kristina et al**
**Valeo Schalter und Sensoren GmbH**
**CDA-IP**
**Laiernstraße 12**
**74321 Bietigheim-Bissingen (DE)**

(56) Entgegenhaltungen:
**US-A1- 2017 140 270**

- **VOLODYMYR MNIH ET AL: "Asynchronous Methods for Deep Reinforcement Learning", CORR (ARXIV), Bd. 1602.01783v2, 16. Juni 2016 (2016-06-16), Seiten 1-19, XP055447272, CA**
- **XIUJUN LI ET AL: "Recurrent Reinforcement Learning: A Hybrid Approach", CORR (ARXIV), Bd. 1509.03044v2, 19. November 2015 (2015-11-19), Seiten 1-11, XP055396372,**

**Beschreibung**

Die Erfindung betrifft ein Verfahren zum Konfigurieren einer Fahrerassistenzvorrichtung eines Kraftfahrzeugs, welche ein neuronales Auswahl-Netzwerk zum Auswählen einer auszuführenden Fahrzeugfunktion des Kraftfahrzeugs aufweist. Die Erfindung betrifft auch eine Fahrerassistenzvorrichtung für ein Kraftfahrzeug, mit einer Umgebungserfassungseinrichtung zum Erfassen einer Umgebung des Kraftfahrzeugs zu einem ersten Zeitpunkt und Bereitstellen einer die zum ersten Zeitpunkt erfasste Umgebung repräsentierenden ersten Umgebungsinformation, sowie mit einem neuronalen Auswahl-Netzwerk zum Auswahlen zumindest einer auszuführenden Fahrzeugaktion in Abhängigkeit der bereitgestellten ersten Umgebungsinformation.

Maschinenlernen findet heute in vielen Bereichen Anwendung, unter anderem im Bereich der Kraftfahrzeuge. Bei dem Maschinenlernen werden im Allgemeinen neuronale Netze auf Basis von manuell klassifizierten Daten trainiert oder angelernt. Das trainierte oder angelernte neuronale Netzwerk wird dann in einem Produkt verkauft, beispielsweise um von einem Sensor erfasste Objekte zu klassifizieren. Dabei werden die neuronalen Netzwerke bei dem Ausliefern "Eingefroren", das heißt ein Lernen deaktiviert, damit das Produkt eine gewährleistete Funktion zuverlässig übernehmen kann. Das führt zu dem Problem, dass die neuronalen Netzwerke nach der Implementierung in einem Produkt nicht weiterlernen und so unter Umständen auf neue Situationen nicht richtig reagieren, beispielsweise neue Objekte nicht richtig klassifizieren oder auf unvorhergesehene Situationen nicht angemessen reagieren. Die neuronalen Netzwerke verlieren also mit der Auslieferung ihre Hauptstärke, nämlich ihre große Flexibilität.

Ein Ansatz, um diesem Vorteilsverlust entgegenzuwirken ist, dass Kraftfahrzeuge gemessene Sensordaten, das heißt gemessene Umgebungsinformationen, und ausgeführte Fahrzeugfunktionen, also Aktionen des Fahrzeugs und/oder des Fahrers, an eine fahrzeugexterne entfernte Recheneinrichtung, einen Server, beispielsweise die sogenannte Cloud, senden. Auf der Recheneinrichtung können die übermittelten Daten dann entsprechend aufbereitet werden und eine Aktualisierung des neuronalen Netzwerks vorbereitet werden. Die entsprechenden Aktualisierungsdaten können dann von der Recheneinrichtung zurück zum Kraftfahrzeug gesendet werden, in welchem das neuronale Netzwerk dann in Abhängigkeit der übermittelten Aktualisierungsdaten angepasst wird, um auch in neuen Situationen die richtige Fahrzeugfunktion auswählen und beispielsweise einem Fahrer vorschlagen oder diese direkt ausführen zu können.

Im Kontext des maschinellen Lernens, insbesondere des verstärkenden oder bestärkenden Lernens, welches auch als sogenanntes "Reinforcement Learning" bekannt ist, ist in diesem Zusammenhang auf den Artikel "Deep Tracking: Seeing Beyond Seeing Using Recurrent Neural Networks" von Peter Ondrúška und Ingmar Posner der Mobile Robotics Group, University of Oxford, hinzuweisen, welche auf der Konferenz der Association for Advancement of Artificial Intelligence zwischen dem 12. und 17. Februar 2016 in Phoenix, Arizona präsentiert wurde. Des Weiteren ebenso auf den Artikel "Simple Statistical Gradient-Following Algorithms for Connectionist Reinforcement Learning" von Ronald J. Williams aus der Zeitschrift Machine Learning 8 auf den Seiten 229 bis 256 von 1992. Schließlich ist in diesem Kontext auch die Veröffentlichung "Asynchronous Methods for Deep Reinforcement Learning" von Wolodimir Mnih et al. zu beachten, welche auf der 33. Internationalen Konferenz zum Maschinenlernen 2016 in New York, USA, veröffentlicht wurde.

US 2017/140270 A1 offenbart Verfahren, Systeme, und Vorrichtungen, einschließlich Computerprogramme kodiert auf Computerspeichermedien, zum asynchronen tiefen verstärkenden Lernen. Eines der Systeme beinhaltet eine Anzahl von Arbeitern, wobei jeder Arbeiter konfiguriert ist unabhängig von jedem anderen Arbeiter zu operieren. Jeder Arbeiter ist mit einem entsprechenden Akteur assoziiert, der mit einer entsprechenden Replik der Umgebung während des Trainierens des tiefen neuronalen Netzwerks interagiert.

Der Erfindung liegt somit die Aufgabe zugrunde, die Flexibilität eines neuronalen Netzwerkes einer Fahrerassistenzvorrichtung in einem Kraftfahrzeug nach dessen Auslieferung oder Inbetriebnahme im Rahmen des bestimmungsgemäßen Gebrauchs zu erhöhen.

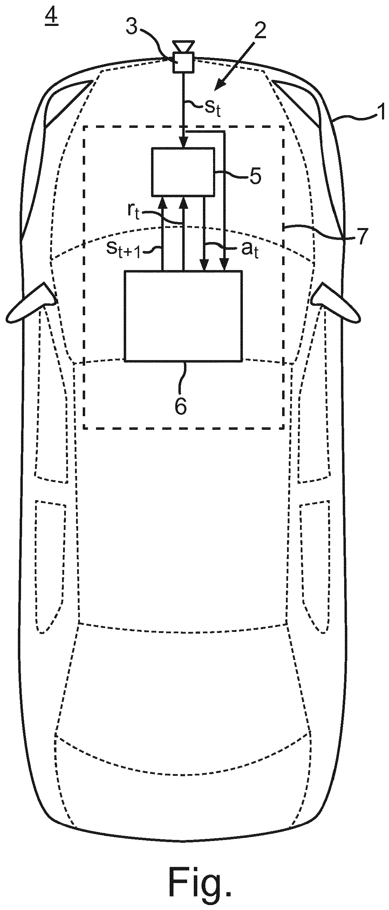

Diese Aufgabe wird durch die Gegenstände der unabhängigen Patentansprüche gelöst. Vorteilhafte Ausführungsformen ergeben sich aus den abhängigen Ansprüchen, der Beschreibung und der Figur.

Ein Aspekt der Erfindung betrifft ein Verfahren zum Konfigurieren einer Fahrerassistenzvorrichtung eines Kraftfahrzeugs bei dessen bestimmungsgemäßem Gebrauch, also im Einsatz der Fahrerassistenzvorrichtung oder des Kraftfahrzeugs. Das Konfigurieren kann hier auch im Sinne eines Nach- oder Feinkonfigurierens verstanden werden, bei welchem eine bereits (beispielsweise mit einer Standardeinstellung) konfigurierte Fahrerassistenzvorrichtung nochmals nachjustiert beziehungsweise nachkonfiguriert wird. Die Fahrerassistenzvorrichtung weist dabei ein neuronales Auswahl-Netzwerk, welches auch als lernfähiges neuronales Auswahl-Netzwerk bezeichnet werden kann, zum Auswählen einer von einem Fahrer und/oder einer Assistenzvorrichtung des Kraftfahrzeugs auszuführenden Fahrzeugfunktion des Kraftfahrzeugs auf.

Ein Verfahrensschritt ist dabei ein Erfassen einer Umgebung des Kraftfahrzeugs zu einem ersten Zeitpunkt und ein Bereitstellen einer die zum ersten Zeitpunkt erfasste Umgebung repräsentierenden ersten Umgebungsinformation durch eine Umgebungserfassungseinrichtung des Kraftfahrzeugs. Ein weiterer Verfahrensschritt ist ein Auswählen zumindest einer auszuführenden Fahrzeugfunktion in Abhängigkeit der bereitgestellten ersten Umgebungsinformation durch das neuronale Auswahl-Netzwerk. Die ausgewählte auszuführende Fahrzeugfunktion kann beispielsweise eine Fahrzeugfunktion sein, welche einem Fahrer in einer durch die erste Umgebungsinformation charakterisierten Fahrsituation vorgeschlagen werden kann oder welche durch eine zugeordnete Assistenzvorrichtung des Kraftfahrzeugs in der von der ersten Umgebungsinformation charakterisierten Fahrsituation ausgelöst oder aktiviert werden kann.

Ein weiterer Verfahrensschritt ist ein Vorhersagen einer Konsequenz eines Ausführens der ausgewählten Fahrzeugfunktion in Abhängigkeit von der ersten Umgebungsinformation durch ein neuronales rekurrentes Vorhersage-Netzwerk oder durch eine entsprechende Vorhersageeinrichtung, welche das neuronale rekurrente Vorhersage-Netzwerk umfasst oder aufweist, der Fahrerassistenzvorrichtung und/oder des Kraftfahrzeugs. Insbesondere kann das Vorhersage-Netzwerk ein langes Kurzzeitgedächtnis-Netzwerk umfassen oder sein, ein sogenanntes Long Short Term Memory (LSTM-) Netzwerk. Rekurrente neuronale Netzwerke, gerade LSTM-Netzwerke, sind besonders geeignet, um eine Vorhersage, beispielsweise über eine Umgebung, zu treffen. Ein weiterer Verfahrensschritt ist ein Bereitstellen einer durch die vorhergesagte Konsequenz bestimmten Information an das neuronale Auswahl-Netzwerk durch die Fahrerassistenzvorrichtung, insbesondere die Vorhersageeinrichtung. In einer bevorzugten Ausführungsform kann auch das Bereitstellen durch das Vorhersage-Netzwerk direkt erfolgen. Die bereitgestellte Information kann auch die vorhergesagte Konsequenz umfassen oder sein. Die vorhergesagte Konsequenz kann also insbesondere in Form der dann bereitgestellten Information vorhergesagt werden. Die Konsequenz kann also im Sinne einer Konsequenzinformation, welche eine Konsequenz repräsentiert, verstanden werden. Mit der von durch die vorhergesagte Konsequenz bestimmten (und somit von der ausgewählten Fahrzeugfunktion abhängigen) Information kann beispielsweise auch noch eine weitere Information an das Auswahl-Netzwerk bereitgestellt werden.

Als weiterer Verfahrensschritt erfolgt ein Anpassen oder Konfigurieren des neuronalen Auswahl-Netzwerks mittels verstärkendem oder bestärkendem Lernens, dem sogenannten "Reinforcement Learning", in Abhängigkeit von der bereitgestellten Information durch die Fahrerassistenzvorrichtung, beispielsweise durch eine entsprechende Recheneinrichtung.

Das neuronale Auswahl-Netzwerk kann somit während eines Betriebs des Kraftfahrzeugs Lernen und somit entsprechend angepasst auf die erfasste Umgebung reagieren, das heißt sein Verhalten, also sein Auswählen der jeweiligen auszuführenden Fahrzeugfunktion an die erfasste Umgebung und damit auch an neue Situationen anpassen. Dabei muss die ausgewählte Fahrzeugfunktion jedoch nicht tatsächlich ausgeführt werden, was potentiell gefährlich ist, sondern es wird vielmehr über das Vorhersage-Netzwerk überprüft, welche Konsequenz ein Ausführen der ausgewählten Fahrzeugfunktion hätte. Das Auswahl-Netzwerk kann dann im Rahmen des verstärkenden Lernens durch eine Beobachtung einer hypothetischen Belohnung, also einer Belohnung, welche im Rahmen des verstärkenden Lernens erreicht würde, falls die ausgewählte Fahrzeugfunktion tatsächlich ausgeführt würde, lernen beziehungsweise angepasst werden. Somit bleibt eine maximale Flexibilität in dem neuronalen Auswahl-Netzwerk erhalten und zugleich werden kritische oder gefährliche Situationen vermieden, da die ausgewählte Fahrzeugfunktion nicht tatsächlich ausgeführt werden muss, um aus der entsprechenden Konsequenz zu lernen.

Es ist vorgesehen, dass bei dem Vorhersagen als Konsequenz in Abhängigkeit von der ersten Umgebungsinformation eine die Umgebung des Kraftfahrzeugs zu einem auf den ersten Zeitpunkt folgenden zweiten Zeitpunkt repräsentierende zweite Umgebungsinformation vorhergesagt wird, und zwar in Abhängigkeit von der ausgewählten Fahrzeugfunktion und unter der Annahme, dass die ausgewählte Fahrzeugfunktion vor dem zweiten Zeitpunkt ausgeführt (oder aktiviert) wird. Die zweite Umgebungsinformation kann so beispielsweise mittels eines Fahrverhaltensmodells des Kraftfahrzeugs und/oder eines Umgebungsmodells und/oder eines Rechenmodells der Umgebungserfassungseinrichtung berechnet werden. Insbesondere kann die zweite Umgebungsinformation der ersten Umgebungsinformation entsprechen, das heißt aus einem Vergleich der beiden Umgebungsinformationen eine Validität des Vorhersagens bestimmt werden.

Des Weiteren ist hier vorgesehen, dass bei dem Bereitstellen als Information die vorhergesagte zweite Umgebungsinformation und eine, für eine Kombination aus der ersten Umgebungsinformation und der ausgewählten auszuführenden Fahrzeugfunktion, gemäß einer in der Fahrerassistenzvorrichtung hinterlegten Vorschrift vorgegebener oder vorgebbarer Belohnungswert an das neuronale Auswahl-Netzwerk bereitgestellt wird. Der Belohnungswert kann beispielsweise in Form einer Tabelle und/oder einer Funktion in der Fahrerassistenzvorrichtung hinterlegt sein. Der Belohnungswert kann dabei eine augenblickliche Belohnung des verstärkenden Lernens repräsentieren. Das Bereitstellen kann dabei durch die Fahrerassistenzvorrichtung, insbesondere die Vorhersageeinrichtung oder das Vorhersage-Netzwerk erfolgen.

Schließlich ist entsprechend vorgesehen, dass bei dem Anpassen das neuronale Auswahl-Netzwerk in Abhängigkeit von dem Belohnungswert und der zweiten Umgebungsinformation angepasst wird.

Das Vorhersage-Netzwerk kann dabei beispielsweise angelernt werden, indem in einem entsprechenden Lernbetrieb die Umgebung des Kraftfahrzeugs zu dem zweiten Zeitpunkt erfasst wird und die entsprechende zweite Umgebungsinformation mit der ersten Umgebungsinformation verglichen wird, nachdem das Vorhersage-Netzwerk die zweite Umgebungsinformation vorhergesagt hat. Der Unterschied zwischen der vorhergesagten und der erfassten, also realen zweiten Umgebungsinformation kann entsprechend zum Lernen benutzt werden. Vergleiche hierzu den oben erwähnten Artikel Deep Tracking: Seeing Beyond Seeing Using Recurrent Neural Networks". Dadurch wird eine Abbildung einer augenblicklichen ersten Umgebungsinformation $s_t$ mit einer entsprechenden, nämlich der ausgewählten auszuführenden Fahrzeugfunktion $a_t$ auf einen Belohnungswert $r_t$ mit der zweiten Umgebungsinformationen $s_{t+1}$ definiert, $(r_t, s_{t+1}) = \rho(s_t, a_t)$. Die Funktion $\rho$ wird somit durch das Vorhersage-Netzwerk approximiert.

Das hat den Vorteil, dass über eine genaue Vorhersage der Umgebung, wie sie heute mit rekurrenten neuronalen Netzen bereits sehr gut erzielt werden kann, auch das neuronale Auswahl-Netzwerk eine besonders gute Rückmeldung über die Qualität ausgewählter Fahrzeugfunktionen erhält. Die Qualität der Vorhersage der Umgebung ist auch jederzeit überprüfbar, was die Genauigkeit des Verfahrens weiter verbessert.

In einer vorteilhaften Ausführungsform ist vorgesehen, dass das Anpassen unabhängig von einem tatsächlichen Ausführen der ausgewählten Fahrzeugfunktion erfolgt. Das Lernen erfolgt somit basierend auf einer hypothetischen Aktion, dem hypothetischen Ausführen der Fahrzeugfunktion.

Das hat den Vorteil, dass gefährliche Situationen vermieden werden und das Auswahl-Netzwerk unterschiedliche Fahrzeugfunktionen auswählen oder in Betracht ziehen kann, ohne dabei tatsächlich eine Fahrzeugfunktion auswählen zu müssen. Somit können beispielsweise auch ausgehend von einer Umgebungsinformation parallel viele unterschiedliche Fahrzeugfunktionen in Betracht gezogen werden und aus den entsprechenden vorhergesagten Konsequenzen, das heißt gewissermaßen aus dem fiktiven Ausführen der unterschiedlichen Fahrzeugfunktionen, gelernt werden.

In einer weiteren vorteilhaften Ausführungsform ist vorgesehen, dass zumindest das Auswählen und das Vorhersagen, insbesondere auch das Bereitstellen und das Anpassen, möglicherweise auch das Erfassen, iterativ durchgeführt wird. Dabei wird insbesondere die zweite Umgebungsinformation einer vorhergehenden Iteration als erste Umgebungsinformation einer folgenden Iteration genutzt. Eine solche Reihe von Iterationen kann hier beispielsweise als Episode bezeichnet werden. Dabei kann auch ein Abbruchkriterium für das iterative Durchführen vorgegeben werden, beispielsweise wenn eine vorgegebene Anzahl an Iterationsschritten erreicht ist oder ein vorgegebenes Ziel erreicht oder verfehlt ist. Das hat den Vorteil, dass das neuronale Auswahl-Netzwerk nicht nur aus einer kurzfristigen augenblicklichen Belohnung, dem Belohnungswert, zu einem vorgegebenen Zeitpunkt lernen kann, sondern vielmehr ein Gesamt-Verlauf, welcher eine Reihe von mehreren ausgeführten Fahrzeugfunktionen oder ausgewählten Fahrzeugfunktionen umfassen kann, bei dem Lernen berücksichtigt wird. Es kann somit bei dem Anpassen nicht nur ein nächster zeitlicher Schritt berücksichtigt werden, sondern vielmehr eine ganze Abfolge, die sich in der Episode wiederspiegelt. Somit können auch in weiterer Zukunft liegende Konsequenzen, welche sich in aus der ersten Umgebungsinformation und der ersten ausgewählten auszuführenden Fahrzeugfunktion sowie weiteren hypothetisch ausgewählten Fahrzeugfunktionen ergeben, berücksichtigt werden. Die führt zu einer besonders sicheren und flexiblen Fahrerassistenzvorrichtung. In einer weiteren vorteilhaften Ausführungsform ist vorgesehen, dass das neuronale Auswahl-Netzwerk ein tiefes neuronales Netz (Deep Neural Network) mit mehreren verborgenen Schichten (Hidden Layers) umfasst oder ist. Das hat den Vorteil, dass das Auswahl-Netzwerk besonders leistungsfähig ist und entsprechend besonders effektiv von den simulierten oder vorhergesagten zweiten Umgebungsinformationen, also den hypothetischen Fahrzeugfunktionen lernen kann.

In einer weiteren vorteilhaften Ausführungsform ist vorgesehen, dass das Auswählen des neuronalen Auswahl-Netzwerks durch ein Auffinden eines Maximums eines Nutzens, welcher insbesondere als Nutzenfunktion der Umgebungsinformation $s_t$ und der ausgewählten Fahrzeugfunktion $a_t$ vorgegeben ist, repräsentiert wird und das Auswählen ein solches Auffinden (implizit oder explizit) umfasst. Dabei kann dieses Auffinden unter Umständen ein fehlerbehaftetes Auffinden sein, beispielsweise in der unten genannten Ausführungsform, bei welcher das Maximum nur mit einer vorgegebenen Wahrscheinlichkeit, welche von 1 verschieden ist, aufgefunden wird. Das Anpassen des neuronalen Auswahl-Netzwerkes wird dabei insbesondere durch ein Überführen der Nutzenfunktion Q in eine aktualisierte Nutzenfunktion Q' repräsentiert, beziehungsweise das Anpassen des neuronalen Netzwerkes kann ein Überführen der Nutzenfunktion Q in die aktualisierte Nutzenfunktion Q' umfassen oder repräsentieren. Dabei ist bevorzugt ein Unterschied zwischen der Nutzenfunktion Q und der aktualisierten Nutzenfunktion Q' proportional zu der Summe aus dem Belohnungswert und einem gewichteten Maximalwert der Nutzenfunktion für die zweite Umgebungsinformation und der ausgewählten Fahrzeugfunktion. Die Nutzenfunktion Q, welche auch eine Qualität der Kombination von Umgebungsinformation und ausgewählter Fahrzeugfunktion beschreibt, kann dabei insbesondere durch folgende Formel beschrieben werden:

$$Q'(s,a) = Q(s,a) + \alpha[r_t + \gamma \times max_a \, von \, Q(s_{t+1},a) - Q(s_t,a_t)]. \tag{I}$$

Dabei ist $\alpha$ ein Proportionalitätsfaktor und $\gamma$ ein Wichtungsfaktor, welcher dementsprechend für den jeweiligen Einsatzbereich gewählt wird.

Dabei kann insbesondere vorgesehen sein, dass die von dem neuronalen Auswahl-Netzwerk ausgewählte Fahrzeugfunktion mit einer vorgegebenen Wahrscheinlichkeit $\varepsilon$ dem Maximum der Nutzenfunktion Q zugeordnet ist, und ansonsten, also mit der Wahrscheinlichkeit 1- $\varepsilon$, eine zufällige Fahrzeugfunktion ist. Die Fahrzeugfunktion wird also

mit der Wahrscheinlichkeit $\varepsilon$ durch das Maximum der Nutzenfunktion und mit der Wahrscheinlichkeit 1-$\varepsilon$ zufällig vorgegeben. Insbesondere nimmt die Wahrscheinlichkeit $\varepsilon$ von Iteration zu Iteration zu. Das hat den Vorteil, dass für das neuronale Netz von einem zufallsgesteuerten Explorationsmodus ($\varepsilon$ klein), in welchem das Erlernen der besten Nutzenfunktion im Vordergrund steht, zu einem Exploitationsmodus ($\varepsilon$ groß) übergegangen werden kann, in welchem stets die Fahrzeugaktion mit dem größten Nutzen gewählt wird. Über das Vorgeben der Wahrscheinlichkeit $\varepsilon$ kann ein Verharren des Systems in einem lokalen Minimum oder Maximum vermieden werden.

Beispielsweise kann das verstärkende Lernen im neuronalen Auswahl-Netzwerk, was, falls das neuronale Auswahl-Netzwerk ein tiefes neuronales Netz (Deep Neural Network) ist, auch als tiefes verstärkendes Lernen (Deep Reinforcement Learning, DRL) bezeichnet werden kann, die folgenden Schritte aufweisen:

Zunächst kann in einem ersten Schritt der Nutzen Q (s, a) abhängig von Umgebungsinformation und Fahrzeugfunktion initialisiert werden. Dies kann beispielsweise in Form einer Tabelle mit diskreten Werten erfolgen oder aber in Form einer hinterlegten Funktion. Werden hier diskrete Werte hinterlegt, so kann beispielsweise eine Normalverteilung um den Mittelwert Null gewählt werden. Als nächstes umfasst das Verfahren ein Definieren einer ersten Schleife, welche durchgeführt werden kann, bis ausgehend von einem oder mehreren Ausgangs-Umgebungsinformationen so für die verschiedenen Ausgangs-Umgebungsinformationen, beispielsweise der ersten gemessenen Umgebungsinformation, eine Vielzahl von Iterationen durchlaufen wird bis sämtliche Episoden, also sämtliche in den Iterationen möglichen Varianten durchlaufen sind, beziehungsweise bis bei dem iterativen Verfahren ein Abbruchkriterium erfüllt ist. Hierfür wird zunächst jeweils für jede Episode ein Ausgangszustand $s_o$ initiiert und sodann eine zweite Schleife durchlaufen, bis ein durch eine finale Umgebungsinformation repräsentierter Endzustand erreicht ist. Der Endzustand kann beispielsweise durch das Ablaufen einer vorgegebene Zeit, das heißt dem Erreichen einer vorgegebenen Anzahl von Iterationsschritten, vorgegeben sein oder durch ein simuliertes Zustandekommen eines Unfalls vorgegeben sein.

Innerhalb der zweiten Schlaufe wird jeweils die Umgebungsinformation s gemessen und entsprechend eine Fahrzeugaktion a in Abhängigkeit von s ausgewählt, wobei dabei der Nutzen Q (s, a) wie folgt berücksichtigt werden kann: So kann als Aktion a entweder mit einer Wahrscheinlichkeit von 1-$\varepsilon$ eine zufällige Fahrzeugaktion ausgewählt werden, oder aber die durch $\bar{a} = a\ max_a$ von $Q(s,a)$ definierte Fahrzeugaktion mit dem größten Nutzen. Dabei kann vorgesehen sein, dass die Wahrscheinlichkeit $\varepsilon$, welche größer 0 und kleiner 1 ist, am Anfang der zweiten Schlaufe einen kleineren Wert, beispielsweise 0,01 einnimmt und am Ende der Schlaufe einen größeren Wert, beispielsweise 0,9. Insbesondere kann der Wert hier stetig vergrößert werden. In der zweiten Schlaufe wird sodann die Umgebungsinformation $s_t$ und die ausgewählte Fahrzeugaktion $a_t$ an das Vorhersage-Netzwerk bereitgestellt, um die nächste, einen neuen Zustand repräsentierende Umgebungsinformation $s_{t+1}$ und den entsprechenden Belohnungswert $r_t$ zu erlangen. Des Weiteren kann in der zweiten Schlaufe sodann als nächster Schritt die Nutzenfunktion Q gemäß oben genannter Gleichung (I) aktualisiert werden und entsprechend für die weiteren Iterationen in der zweiten Schlaufe die zweite Umgebungsinformation $s_{t+1}$ als neue Umgebungsinformation $s_t$ genutzt werden.

In einer weiteren vorteilhaften Ausführungsform ist vorgesehen, dass die Fahrzeugfunktion eine Fahrfunktion des Kraftfahrzeugs umfasst oder ist. Hier bietet die Anwendung des neuronalen Auswahl-Netzwerkes besondere Vorteile, da einerseits neuronale Netze in zunehmendem Maße in der Lage sind Fahrfunktionen zu übernehmen und damit einen Fahrer zu entlasten, andererseits jedoch gerade Fahrfunktionen eine große Vielzahl an potenziell gefährlichen Folgen nach sich ziehen, da schwer abzuschätzenden Informationen ausgewertet oder berücksichtigt werden müssen, sodass hier die über das beschriebene Verfahren erlangte Flexibilität besonders vorteilhaft ist.

In einer nicht beanspruchten Ausführungsform ist vorgesehen, dass das neuronale Vorhersage-Netzwerk ein im Sinne eines Nichtlernenden Netzwerks unveränderliches Netzwerk ist oder umfasst. Das neuronale Vorhersage-Netzwerk ist somit im Gegensatz zu dem Auswahl-Netzwerk nicht lernfähig. Das hat den Vorteil, dass eine Stabilität des Verfahrens erhöht ist.

In einer weiteren vorteilhaften Ausführungsform ist vorgesehen, dass auch das neuronale Vorhersage-Netzwerk ein lernendes Netzwerk ist, und beispielsweise die vorhergesagte zweite Umgebungsinformation mit einer zum zweiten Zeitpunkt in Abhängigkeit von der erfassten Umgebung erzeugten zweiten Umgebungsinformation verglichen und das Vorhersage-Netzwerk mit dem Vergleichsergebnis gelernt wird.

In einer nicht beanspruchten Ausführungsform kann vorgesehen sein, dass bei dem Vorhersagen als Konsequenz in Abhängigkeit von der ersten Umgebungsinformation ein Bias-Term $b_t(s_t)$ oder Bias-Wert einer Vorteilsfunktion, welche auch als Advantage Value Function bezeichnet werden kann, für ein asynchrones verstärkendes Lernen vorhergesagt wird. Der Bias-Term $b_t$ wird üblicherweise mit einer Wertfunktion (Value Function) $V(s_t)$ angenähert, wobei die Umgebungsinformation $s_t$ einen Systemzustand zum Zeitpunkt t repräsentiert. Da die Wertfunktion bei einem iterativen Verfahren nur am Ende des Durchlaufens der Iterationsschritte, also am Ende einer sogenannten Episode bekannt ist, wird wiederum die Wertfunktion $V(s_t)$ durch $\bar{V}^i(s_t)$ angenähert, wobei $\bar{V}^i(s_t)$ eine augenblickliche Abschätzung der Wertfunktion im Iterationsschritt Nummer i ist. In der vorliegenden Ausführungsform ist somit das Vorhersage-Netzwerk dahingehend trainiert, dass es die zukünftige Wertfunktion $V(s_t)$ ausgehend von oder in Abhängigkeit von einem augenblicklichen Zustand, also der ersten Umgebungsinformation $s_t$ bis zum Ende der Iterationen, also zum Ende der Episode für alle künftigen Zustände oder Umgebungsinformationen s vorhersagt. Dies ist eine bessere Annäherung als sie durch die Verwendung von $\overline{V}^i(s_t)$ erreicht werden kann, da das Vorhersage-Netzwerk mit vielen Zuständen oder Umgebungsinformationen s und mit den zugeordneten Wertfunktionen $V(s_t)$, welche jeweils am Ende des Trainings oder Lernens bekannt sind, trainiert wird. Daher ist die wahre Wertfunktion $V(s_t)$ und damit der Bias-Term $b_t$ über das angelernte oder trainierte Vorhersage-Netzwerk wegen dem Trainieren mit echten Daten besser angenähert, als durch es mit dem Abschätzen der unvollständigen Einzelwerte $\overline{V}^i(s_t)$ möglich ist. Bei dem Bereitstellen wird hier als Information ein Gradententerm oder Gradientenwert für die Verknüpfungsgewichte, also Wichtungen oder Gewichte oder Stärken der jeweiligen Verknüpfungen, des neuronalen Auswahl-Netzwerks bereitgestellt, welcher in Abhängigkeit von dem vorhergesagten Bias-Term vorgegeben ist. Der Gradententerm kann insbesondere als $\nabla_\theta (log(a_t|s_t;\, \Theta)(r_t - b_t(s_t))$ berechnet werden. Dabei bezeichnet $\Theta$ die Verknüpfungsgewichte, $s_t$ die Umgebungsinformation, also den Zustand von Umgebung und Kraftfahrzeug, $a_t$ die ausgewählte Fahrzeugfunktion zum Zeitpunkt t und $r_t$ eine augenblickliche Belohnung des verstärkenden Lernens. Der Ausdruck $a_t|s_t$ bezeichnet die Wahrscheinlichkeit, dass bei einer bestimmten Umgebungsinformation $s_t$ die jeweilige Fahrzeugfunktion $a_t$ ausgewählt oder ausgeführt wird. Der Term $(r_t - b_t(s_t))$ kann dabei als Vorteilsterm bezeichnet werden, der angibt, welcher Vorteil oder Gewinn erzielt wird, wenn in einem durch die Umgebungsinformation $s_t$ bestimmten Zustand die Fahrzeugfunktion $a_t$ ausgewählt beziehungsweise ausgeführt wird. Bei dem Anpassen ist entsprechend vorgesehen, die Verknüpfungsgewichte des neuronalen Auswahl-Netzwerks in Abhängigkeit von dem Gradententerm anzupassen, beispielsweise indem der oben berechnete Gradient in das Auswahl-Netzwerk eingespeist wird. Das verstärkende Lernen umfasst oder ist dann vorliegend ein asynchrones verstärkendes Lernen. Das hat den Vorteil, dass die Wahrscheinlichkeit für eine gewisse Aktion für eine bestimmte Umgebungsinformation direkt gelernt wird.

Ein weiterer Aspekt der Erfindung betrifft eine Fahrerassistenzvorrichtung für ein Kraftfahrzeug, mit einer Umgebungserfassungseinrichtung zum Erfassen einer Umgebung des Kraftfahrzeugs zu einem ersten Zeitpunkt und zum Bereitstellen einer die zum ersten Zeitpunkt erfasste Umgebung repräsentierenden ersten Umgebungsinformation, sowie mit einem neuronalen Auswahl-Netzwerk zum Auswählen zumindest einer auszuführenden Fahrzeugfunktion in Abhängigkeit der bereitgestellten ersten Umgebungsinformation.

Dabei ist auch ein rekurrentes neuronales Vorhersage-Netzwerk zum Vorhersagen einer Konsequenz eines Ausführens der ausgewählten Fahrzeugfunktion, insbesondere in Form einer die Umgebung des Kraftfahrzeugs zu einem auf den ersten Zeitpunkt folgenden zweiten Zeitpunkt repräsentierenden zweiten Umgebungsinformation in Abhängigkeit von der ausgewählten Fahrzeugfunktion unter der Annahme, dass die ausgewählte Fahrzeugfunktion vor dem zweiten Zeitpunkt ausgeführt wird, Teil der Fahrerassistenzvorrichtung.

Dabei ist die Fahrerassistenzvorrichtung ausgebildet, eine durch die vorhergesagte Konsequenz bestimmte Information, insbesondere die zweite Umgebungsinformation und eine für eine Kombination aus der ersten Umgebungsinformation und der ausgewählten auszuführenden Fahrzeugfunktion vorgegebenen Belohnungswert (der auch als Belohnungsinformation bezeichnet werden kann), an das neuronale Auswahl-Netzwerk bereitzustellen oder in das neuronale Auswahl-Netzwerk einzuspeisen. Die Fahrerassistenzvorrichtung ist zusätzlich ausgebildet, das neuronale Auswahl-Netzwerk mittels verstärkenden Lernens in Abhängigkeit von der bereitgestellten Information, insbesondere dem Belohnungswert oder der Belohnungsinformation und der zweiten Umgebungsinformation anzupassen.

Es ist vorgesehen, dass bei dem Vorhersagen als Konsequenz in Abhängigkeit von der ersten Umgebungsinformation eine die Umgebung des Kraftfahrzeugs zu einem auf den ersten Zeitpunkt folgenden zweiten Zeitpunkt repräsentierende zweite Umgebungsinformation vorhergesagt wird, und zwar in Abhängigkeit von der ausgewählten Fahrzeugfunktion und unter der Annahme, dass die ausgewählte Fahrzeugfunktion vor dem zweiten Zeitpunkt ausgeführt wird.

Des Weiteren ist hier vorgesehen, dass bei dem Bereitstellen als Information die vorhergesagte zweite Umgebungsinformation und eine, für eine Kombination aus der ersten Umgebungsinformation und der ausgewählten auszuführenden Fahrzeugfunktion, gemäß einer in der Fahrerassistenzvorrichtung hinterlegten Vorschrift vorgegebener oder vorgebbarer Belohnungswert an das neuronale Auswahl-Netzwerk bereitgestellt wird.

Schließlich ist entsprechend vorgesehen, dass bei dem Anpassen das neuronale Auswahl-Netzwerk in Abhängigkeit von dem Belohnungswert und der zweiten Umgebungsinformation angepasst wird.

Vorteile und vorteilhafte Ausführungsformen der Fahrerassistenzvorrichtung entsprechen hier Vorteilen und vorteilhaften Ausführungsformen des beschriebenen Verfahrens.

Ein weiterer Aspekt der Erfindung betrifft ein Kraftfahrzeug mit einer solchen Fahrerassistenzvorrichtung.

Ausführungsbeispiele der Erfindung werden nachfolgend anhand einer schematischen Zeichnung näher erläutert.

In der einzigen Fig. ist ein Kraftfahrzeug 1 mit einer beispielhaften Ausführungsform einer Fahrerassistenzvorrichtung 2 schematisch dargestellt. Die Fahrerassistenzvorrichtung 2 umfasst eine vorliegend als Kameraeinrichtung ausgeführte Umgebungserfassungseinrichtung 3, welche dem Erfassen einer Umgebung 4 des Kraftfahrzeugs 1 dient sowie dem Bereitstellen einer die erfasste Umgebung 4 repräsentierenden ersten Umgebungsinformation $s_t$.

Des Weiteren umfasst die Fahrerassistenzvorrichtung 2 ein neuronales Auswahl-Netzwerk 5 zum Auswählen zumindest einer auszuführenden Fahrzeugfunktion $a_t$ in Abhängigkeit der bereitgestellten Umgebungsinformation $s_t$. Die Fahrerassistenzvorrichtung 2 weist ein rekurrentes neuronales Vorhersage-Netzwerk 6 zum Vorhersagen einer Konsequenz eines Ausführens der ausgewählten Fahrzeugfunktion $a_t$ auf, vorliegend zum Vorhersagen einer die Umgebung 4 des Kraftfahrzeugs 1 zu einem auf den ersten Zeitpunkt t folgenden zweiten Zeitpunkt t+1 repräsentierenden zweiten Umgebungsinformation $s_{t+1}$ in Abhängigkeit von der ausgewählten Fahrzeugfunktion $a_t$ unter der Annahme, dass die ausgewählte Fahrzeugfunktion $a_t$ vor dem zweiten Zeitpunkt t+1 ausgeführt wird.

Die Fahrerassistenzvorrichtung 2 ist auch ausgebildet, eine durch die vorhergesagte Konsequenz bestimmte Information, vorliegend die vorhergesagte zweite Umgebungsinformation $s_{t+1}$ und eine für eine Kombination aus der ersten Umgebungsinformation $s_t$ und der ausgewählten auszuführenden Fahrzeugfunktion $a_t$ vorgegebenen Belohnungswert $r_t$ an das neuronale Auswahl-Netzwerk 5 bereitzustellen sowie das neuronale Auswahl-Netzwerk 5 mittels verstärkenden Lernens in Abhängigkeit von der bereitgestellten Information, hier in Abhängigkeit von dem Belohnungswert $r_t$ und der zweiten Umgebungsinformation $s_{t+1}$, anzupassen. Die beiden neuronalen Netzwerke 5, 6 sind vorliegend in einer Recheneinheit 7 der Fahrerassistenzvorrichtung 2 implementiert.

Somit kann das neuronale Auswahl-Netzwerk 5 lernen, indem es die Belohnung, also den Belohnungswert $r_t$, sowie einen zukünftigen Zustand von Kraftfahrzeug 1 und Umgebung 4, wie er durch die zweite Umgebungsinformation $s_{t+1}$ repräsentiert ist, welche auszuführenden Fahrzeugfunktionen $a_t$ vorteilhaft und welche weniger vorteilhaft sind, um so auch in neuen, bei einer Produktion der Fahrerassistenzvorrichtung 2 oder des Kraftfahrzeugs 1 noch nicht bekannten Situationen die beste auszuführende Fahrzeugfunktion $a_t$ auszuwählen.

**Patentansprüche**

1. Verfahren zum Konfigurieren einer Fahrerassistenzvorrichtung (2) eines Kraftfahrzeugs (1), welche ein neuronales Auswahl-Netzwerk (5) zum Auswählen einer auszuführenden Fahrzeugfunktion ($a_t$) des Kraftfahrzeugs (1) aufweist, mit den Verfahrensschritten:

   a) Erfassen einer Umgebung (4) des Kraftfahrzeugs (1) zu einem ersten Zeitpunkt (t) und Bereitstellen einer die zum ersten Zeitpunkt (t) erfasste Umgebung (4) repräsentierenden ersten Umgebungsinformation ($s_t$) durch eine Umgebungserfassungseinrichtung (3) des Kraftfahrzeugs (1);
   b) Auswählen zumindest einer auszuführenden Fahrzeugfunktion ($a_t$) in Abhängigkeit der bereitgestellten ersten Umgebungsinformation ($s_t$) durch das neuronale Auswahl-Netzwerk (5);
   c) Vorhersagen einer Konsequenz eines Ausführens der ausgewählten Fahrzeugfunktion ($a_t$) in Abhängigkeit von der ersten Umgebungsinformation ($s_t$) durch ein neuronales rekurrentes Vorhersage-Netzwerk (6) der Fahrerassistenzvorrichtung (2), wobei als Konsequenz in Abhängigkeit von der ersten Umgebungsinformation ($s_t$) eine die Umgebung (4) des Kraftfahrzeugs (1) zu einem auf den ersten Zeitpunkt (t) folgenden zweiten Zeitpunkt (t+1) repräsentierende zweite Umgebungsinformation ($s_{t+1}$) in Abhängigkeit von der ausgewählten Fahrzeugfunktion ($a_t$) unter der Annahme, dass die ausgewählte Fahrzeugfunktion ($a_t$) vor dem zweiten Zeitpunkt (t+1) ausgeführt wird, vorhergesagt wird;
   d) Bereitstellen einer durch die vorhergesagte Konsequenz bestimmten Information an das neuronale Auswahl-Netzwerk (5), wobei als Information die vorhergesagte zweite Umgebungsinformation ($s_{t+1}$) und ein, für eine Kombination aus der ersten Umgebungsinformation ($s_t$) und der ausgewählten auszuführenden Fahrzeugfunktion ($a_t$), gemäß einer in der Fahrerassistenzvorrichtung hinterlegten Vorschrift vorgegebener Belohnungswert ($r_t$) an das neuronale Auswahl-Netzwerk (5) bereitgestellt wird;
   e) Anpassen des neuronalen Auswahl-Netzwerks (5) mittels verstärkendem Lernen in Abhängigkeit von der bereitgestellten Information, d.h. in Abhängigkeit von dem Belohnungswert ($r_t$) und der zweiten Umgebungsinformation ($s_{t+1}$).

2. Verfahren nach Anspruch 1,
   **dadurch gekennzeichnet, dass**
   das Anpassen gemäß Verfahrensschritt e) unabhängig von einem tatsächlichen Ausführen der ausgewählten Fahrzeugfunktion ($a_t$) erfolgt.

3. Verfahren nach einem der vorhergehenden Ansprüche,
   **dadurch gekennzeichnet, dass**
   die Verfahrensschritte b) bis c), insbesondere b) bis e) iterativ durchgeführt werden, wobei insbesondere die zweite Umgebungsinformation ($s_{t+1}$) einer vorhergehenden Iteration als erste Umgebungsinformation ($s_t$) einer folgenden

Iteration genutzt wird.

4. Verfahren nach einem der vorhergehenden Ansprüche,
**dadurch gekennzeichnet, dass**
das neuronale Auswahl-Netzwerk (5) ein tiefes neuronales Netz mit mehreren verborgenen Schichten umfasst.

5. Verfahren nach einem der vorhergehenden Ansprüche,
**dadurch gekennzeichnet, dass**
das Auswählen des neuronalen Auswahl-Netzwerks (5) durch ein Auffinden eines Maximums eines Nutzens, welcher insbesondere als Nutzenfunktion Q der Umgebungsinformation ($s_t$) und der ausgewählten Fahrzeugfunktion ($a_t$) vorgegeben ist, repräsentiert wird und insbesondere das Anpassen des neuronalen Auswahl-Netzwerks (5) durch ein Überführen der Nutzenfunktion Q in eine aktualisierte Nutzenfunktion Q' repräsentiert wird, wobei bevorzugt ein Unterschied zwischen der Nutzenfunktion Q und der aktualisierten Nutzenfunktion Q' proportional zu der Summe aus dem Belohnungswert ($r_t$) und einem gewichteten Maximalwert der Nutzenfunktion für die zweite Umgebungs-information ($s_{t+1}$) und der gewählten Fahrzeugfunktion ($a_t$) ist.

6. Verfahren nach Anspruch 3 und 5,
**dadurch gekennzeichnet, dass**
die von dem neuronalen Auswahl-Netzwerk (5) ausgewählte Fahrzeugfunktion ($a_t$) mit einer vorgegebenen Wahr-scheinlichkeit $\varepsilon$ dem Maximum der Nutzenfunktion Q zugeordnet ist und mit der Wahrscheinlichkeit (1- $\varepsilon$) eine zufällige Fahrzeugfunktion ($a_t$) ist, und insbesondere die Wahrscheinlichkeit $\varepsilon$ von Iteration zu Iteration zunimmt.

7. Verfahren nach einem der vorhergehenden Ansprüche,
**dadurch gekennzeichnet, dass**
die Fahrzeugfunktion ($a_t$) eine Fahrfunktion umfasst.

8. Verfahren nach einem der vorhergehenden Ansprüche,
**dadurch gekennzeichnet, dass**
das neuronale Vorhersage-Netzwerk (6) ein lernendes Netzwerk ist.

9. Verfahren nach einem der vorhergehenden Ansprüche,
**dadurch gekennzeichnet, dass** das Vorhersage-Netzwerk ein langes Kurzzeitgedächtnis-Netzwerk umfasst, ein sogenanntes Long Short Term Memory (LSTM-) Netzwerk.

10. Verfahren nach einem der vorhergehenden Ansprüche, **dadurch gekennzeichnet, dass** das Vorhersage-Netzwerk (6) angelernt wird, indem in einem entsprechenden Lernbetrieb die Umgebung (4) des Kraftfahrzeugs (1) zu dem zweiten Zeitpunkt (t+1) erfasst wird und die entsprechende zweite Umgebungsinformation ($s_{t+1}$) mit der ersten Umgebungsinformation ($s_t$) verglichen wird, nachdem das Vorhersage-Netzwerk (6) die zweite Umgebungsinfor-mation ($s_{t+1}$) vorhergesagt hat; und dass der Unterschied zwischen der vorhergesagten Umgebungsinformation und der erfassten, also realen zweiten Umgebungsinformation ($s_{t+1}$) zum Lernen des Vorhersage-Netzwerks (6) benutzt wird.

11. Fahrerassistenzvorrichtung (2) für ein Kraftfahrzeug (1), mit

- einer Umgebungserfassungseinrichtung (3) zum Erfassen einer Umgebung (4) des Kraftfahrzeugs (1) zu einem ersten Zeitpunkt (t) und zum Bereitstellen einer die zum ersten Zeitpunkt (t) erfasste Umgebung (4) repräsentierenden ersten Umgebungsinformation ($s_t$);
- einem neuronale Auswahl-Netzwerk (5) zum Auswählen zumindest einer auszuführenden Fahrzeugfunktion ($a_t$) in Abhängigkeit der bereitgestellten ersten Umgebungsinformation ($s_t$);

**gekennzeichnet durch**

- ein rekurrentes neuronales Vorhersage-Netzwerk (6) zum Vorhersagen einer Konsequenz eines Ausführens der ausgewählten Fahrzeugfunktion ($a_t$), wobei als Konsequenz in Abhängigkeit von der ersten Umgebungs-information ($s_t$) eine die Umgebung (4) des Kraftfahrzeugs (1) zu einem auf den ersten Zeitpunkt (t) folgenden zweiten Zeitpunkt (t+1) repräsentierende zweite Umgebungsinformation ($s_{t+1}$) in Abhängigkeit von der ausge-wählten Fahrzeugfunktion ($a_t$) unter der Annahme, dass die ausgewählte Fahrzeugfunktion ($a_t$) vor dem zweiten Zeitpunkt (t+1) ausgeführt wird, vorhergesagt wird;

und **dadurch, dass**

die Fahrerassistenzvorrichtung (2) ausgebildet ist, eine durch die vorhergesagte Konsequenz bestimmte Information an das neuronale Auswahl-Netzwerk (5) bereitzustellen, wobei als Information die vorhergesagte zweite Umgebungsinformation ($s_{t+1}$) und ein, für eine Kombination aus der ersten Umgebungsinformation ($s_t$) und der ausgewählten auszuführenden Fahrzeugfunktion ($a_t$), gemäß einer in der Fahrerassistenzvorrichtung hinterlegten Vorschrift vorgegebener Belohnungswert ($r_t$) an das neuronale Auswahl-Netzwerk (5) bereitgestellt wird; sowie dass die Fahrerassistenzvorrichtung (2) ausgebildet ist das neuronale Auswahl-Netzwerk (5) mittels verstärkendem Lernen in Abhängigkeit von der bereitgestellten Information anzupassen, d.h. in Abhängigkeit von dem Belohnungswert ($r_t$) und der zweiten Umgebungsinformation ($s_{t+1}$).

12. Kraftfahrzeug (1) mit einer Fahrerassistenzvorrichtung (2) nach Anspruch 11.

**Claims**

1. Method for configuring a driver assistance apparatus (2) of a motor vehicle (1), which driver assistance apparatus has a neural selection network (5) for selecting a vehicle function ($a_t$) of the motor vehicle (1) to be performed, having the method steps of:

   a) capture of surroundings (4) of the motor vehicle (1) at a first time (t) and provision of first surroundings information ($s_t$), which represents the surroundings (4) captured at the first time (t), by a surroundings capture device (3) of the motor vehicle (1);
   b) selection, by the neural selection network (5), on the basis of the provided first surroundings information ($s_t$), of at least one vehicle function ($a_t$) to be performed;
   c) prediction of a consequence of performance of the selected vehicle function ($a_t$) on the basis of the first surroundings information ($s_t$) by a neural recurrent prediction network (6) of the driver assistance apparatus (2), wherein the consequence predicted on the basis of the first surroundings information ($s_t$) is second surroundings information ($s_{t+1}$), which represents the surroundings (4) of the motor vehicle (1) at a second time (t+1) that follows the first time (t), on the basis of the selected vehicle function ($a_t$) on the assumption that the selected vehicle function ($a_t$) is performed before the second time (t+1);
   d) provision of information determined by the predicted consequence to the neural selection network (5), wherein the information provided to the neural selection network (5) is the predicted second surroundings information ($s_{t+1}$) and a reward value ($r_t$) predefined, according to a rule stored in the driver assistance apparatus, for a combination of the first surroundings information ($s_t$) and the selected vehicle function ($a_t$) to be performed;
   e) adaptation of the neural selection network (5) by means of reinforcement learning on the basis of the provided information, i.e. on the basis of the reward value ($r_t$) and the second surroundings information ($s_{t+1}$).

2. Method according to Claim 1,
   **characterized in that**
   the adaptation according to method step e) is effected independently of an actual performance of the selected vehicle function ($a_t$).

3. Method according to either of the preceding claims,
   **characterized in that**
   method steps b) to c), in particular b) to e), are carried out iteratively, with in particular the second surroundings information ($s_{t+1}$) of a preceding iteration being used as first surroundings information ($s_t$) of a following iteration.

4. Method according to one of the preceding claims,
   **characterized in that**
   the neural selection network (5) comprises a deep neural network having multiple hidden layers.

5. Method according to one of the preceding claims,
   **characterized in that**
   the selection by the neural selection network (5) is represented by a discovery of a maximum of a benefit, which is in particular predefined as a benefit function Q of the surroundings information ($s_t$) and the selected vehicle function ($a_t$), and in particular the adaptation of the neural selection network (5) is represented by a conversion of the benefit function Q into an updated benefit function Q', wherein preferably a difference between the benefit function Q and the updated benefit function Q' is proportional to the sum of the reward value ($r_t$) and a weighted maximum value of the benefit function for the second surroundings information ($s_{t+1}$) and the chosen vehicle function ($a_t$).

6. Method according to Claims 3 and 5,
**characterized in that**
the vehicle function ($a_t$) selected by the neural selection network (5) has a predefined probability $\varepsilon$ of being associated with the maximum of the benefit function Q and has the probability ($1-\varepsilon$) of being a random vehicle function ($a_t$), and in particular the probability $\varepsilon$ increases from iteration to iteration.

7. Method according to one of the preceding claims,
**characterized in that**
the vehicle function ($a_t$) comprises a driving function.

8. Method according to one of the preceding claims,
**characterized in that**
the neural prediction network (6) is a learning network.

9. Method according to one of the preceding claims,
**characterized in that** the prediction network comprises a long short-term memory network, a so-called LSTM network.

10. Method according to one of the preceding claims, **characterized in that** the prediction network (6) is trained by virtue of an appropriate learning mode involving the surroundings (4) of the motor vehicle (1) being captured at the second time (t+1) and the corresponding second surroundings information ($s_{t+1}$) being compared with the first surroundings information ($s_t$) after the prediction network (6) has predicted the second surroundings information ($s_{t+1}$); and **in that** the difference between the predicted surroundings information and the captured, that is to say real, second surroundings information ($s_{t+1}$) is used for the learning of the prediction network (6).

11. Driver assistance apparatus (2) for a motor vehicle (1), having

- a surroundings capture device (3) for capturing surroundings (4) of the motor vehicle (1) at a first time (t) and for providing first surroundings information ($s_t$), which represents the surroundings (4) captured at the first time (t);
- a neural selection network (5) for selecting, on the basis of the provided first surroundings information ($s_t$), at least one vehicle function ($a_t$) to be performed;

**characterized by**

- a recurrent neural prediction network (6) for predicting a consequence of performance of the selected vehicle function ($a_t$), wherein the consequence predicted on the basis of the first surroundings information ($s_t$) is second surroundings information ($s_{t+1}$), which represents the surroundings (4) of the motor vehicle (1) at a second time (t+1) that follows the first time (t), on the basis of the selected vehicle function ($a_t$) on the assumption that the selected vehicle function ($a_t$) is performed before the second time (t+1);

and in that
the driver assistance apparatus (2) is designed to provide information determined by the predicted consequence to the neural selection network (5), wherein the information provided to the neural selection network (5) is the predicted second surroundings information ($s_{t+1}$) and a reward value ($r_t$) predefined, according to a rule stored in the driver assistance apparatus, for a combination of the first surroundings information ($s_t$) and the selected vehicle function ($a_t$) to be performed; and in that the driver assistance apparatus (2) is designed to adapt the neural selection network (5) by means of reinforcement learning on the basis of the provided information, i.e. on the basis of the reward value ($r_t$) and the second surroundings information ($s_{t+1}$).

12. Motor vehicle (1) having a driver assistance apparatus (2) according to Claim 11.

**Revendications**

1. Procédé de configuration d'un dispositif d'aide à la conduite (2) d'un véhicule automobile (1), qui comporte un réseau neuronal de sélection (5) destiné à sélectionner une fonction de véhicule ($a_t$) à exécuter du véhicule automobile (1), comprenant les étapes de procédé consistant à :

a) détecter un environnement (4) du véhicule automobile (1) à un premier instant (t) et fournir une première information d'environnement ($s_t$) représentant l'environnement (4) détecté au premier instant (t) au moyen d'un dispositif de détection d'environnement (3) du véhicule automobile (1) ;

b) sélectionner au moins une fonction de véhicule ($a_t$) à exécuter en fonction de la première information d'environnement fournie ($s_t$) au moyen du réseau neuronal de sélection (5) ;

c) prédire une conséquence de l'exécution de la fonction de véhicule sélectionnée ($a_t$) en fonction de la première information d'environnement ($s_t$) au moyen d'un réseau neuronal de prédiction récurrent (6) du dispositif d'aide à la conduite (2), dans lequel, en conséquence, en fonction de la première information d'environnement ($s_t$), une seconde information d'environnement ($s_{t+1}$) représentant l'environnement (4) du véhicule automobile (1) à un second instant (t+1) suivant le premier instant (t) est prédite en fonction de la fonction de véhicule sélectionnée ($a_t$) en supposant que la fonction de véhicule sélectionnée ($a_t$) est exécutée avant le second instant (t+1) ;

d) fournir au réseau neuronal de sélection (5) une information déterminée par la conséquence prédite, dans lequel la seconde information d'environnement prédite ($s_{t+1}$) et une valeur de récompense ($r_t$) prédéterminée pour une combinaison de la première information d'environnement ($s_t$) et de la fonction de véhicule sélectionnée ($a_t$) à exécuter, conformément à une règle stockée dans le dispositif d'aide à la conduite, sont fournies en tant qu'information au réseau neuronal de sélection (5) ;

e) adapter le réseau neuronal de sélection (5) au moyen d'un apprentissage par renforcement en fonction de l'information fournie, c'est-à-dire en fonction de la valeur de récompense ($r_t$) et de la deuxième information d'environnement ($s_{t+1}$).

2. Procédé selon la revendication 1,
**caractérisé en ce que**
l'adaptation selon l'étape de procédé a) est effectuée indépendamment d'une exécution réelle de la fonction de véhicule sélectionnée ($a_t$).

3. Procédé selon l'une quelconque des revendications précédentes,
**caractérisé en ce que**
les étapes de procédé b) à c), en particulier b) à e), sont effectuées de manière itérative, dans lequel la deuxième information d'environnement ($s_{t+1}$) d'une itération précédente est en particulier utilisée en tant que première information d'environnement ($s_t$) d'une itération suivante.

4. Procédé selon l'une quelconque des revendications précédentes,
**caractérisé en ce que**
le réseau neuronal de sélection (5) comprend un réseau neuronal profond à couches cachées multiples.

5. Procédé selon l'une quelconque des revendications précédentes,
**caractérisé en ce que**
la sélection du réseau neuronal de sélection (5) est représentée par la recherche d'un maximum d'une utilité, qui est en particulier prédéterminée en tant que fonction d'utilité Q de l'information d'environnement ($s_t$) et de la fonction de véhicule sélectionnée ($a_t$), et l'adaptation du réseau neuronal de sélection (5) est en particulier représentée par une transformation de la fonction d'utilité Q en une fonction d'utilité actualisée Q', dans lequel une différence entre la fonction d'utilité Q et la fonction d'utilité actualisée Q' est de préférence proportionnelle à la somme de la valeur de récompense ($r_t$) et d'une valeur maximale pondérée de la fonction d'utilité pour la seconde information d'environnement ($s_{t+1}$) et la fonction de véhicule sélectionnée ($a_t$) .

6. Procédé selon les revendications 3 et 5,
**caractérisé en ce que**
la fonction de véhicule ($a_t$) sélectionnée par le réseau neuronal de sélection (5) est associée au maximum de la fonction d'utilité Q avec une probabilité $\varepsilon$ prédéterminée et est une fonction de véhicule ($a_t$) aléatoire ayant une probabilité (1-$\varepsilon$), la probabilité $\varepsilon$ augmentant en particulier d'itération en itération.

7. Procédé selon l'une quelconque des revendications précédentes,
**caractérisé en ce que**
la fonction de véhicule ($a_t$) comprend une fonction de conduite.

8. Procédé selon l'une quelconque des revendications précédentes,

**caractérisé en ce que**
le réseau neuronal de prédiction (6) est un réseau à apprentissage.

9. Procédé selon l'une quelconque des revendications précédentes,
**caractérisé en ce que**
le réseau de prédiction comprend un réseau à mémoire à court terme longue, ou réseau de type dit Long Short Term Memory (LSTM).

10. Procédé selon l'une quelconque des revendications précédentes, **caractérisé en ce que** le réseau de prédiction (6) est soumis à un apprentissage consistant à détecter, lors d'une opération d'apprentissage correspondante, l'environnement (4) du véhicule automobile (1) au second instant (t+1) et à comparer la seconde information d'environnement ($s_{t+1}$) correspondante à la première information d'environnement ($s_t$) après que le réseau de prédiction (6) a prédit la seconde information d'environnement ($s_{t+1}$) ; et **en ce que** la différence entre l'information d'environnement prédite et la seconde information d'environnement détectée, c'est-à-dire réelle, ($s_{t+1}$) est utilisée pour l'apprentissage du réseau de prédiction (6).

11. Dispositif d'aide à la conduite (2) pour un véhicule automobile (1), comprenant

- un dispositif de détection d'environnement (3) destiné à détecter un environnement (4) du véhicule automobile (1) à un premier instant (t) et à fournir une première information d'environnement ($s_t$) représentant l'environnement (4) détecté au premier instant (t) ;
- un réseau neuronal de sélection (5) destiné à sélectionner au moins une fonction de véhicule ($a_t$) à exécuter en fonction de la première information d'environnement fournie ($s_t$) ;

**caractérisé par**

- un réseau neuronal de prédiction récurrent (6) destiné à prédire une conséquence de l'exécution de la fonction de véhicule sélectionnée ($a_t$), dans lequel, en conséquence, en fonction de la première information d'environnement ($s_t$), une seconde information d'environnement ($s_{t+1}$) représentant l'environnement (4) du véhicule automobile (1) à un second instant (t+1) suivant le premier instant (t) est prédite en fonction de la fonction de véhicule sélectionnée ($a_t$) en supposant que la fonction de véhicule sélectionnée ($a_t$) est exécutée avant le second instant (t+1) ;

et en ce que
le dispositif d'aide à la conduite (2) est conçu pour fournir au réseau neuronal de sélection (5) une information déterminée par la conséquence prédite, dans lequel la seconde information d'environnement prédite ($s_{t+1}$) et une valeur de récompense ($r_t$) prédéterminée pour une combinaison de la première information d'environnement ($s_t$) et de la fonction de véhicule sélectionnée ($a_t$) à exécuter, conformément à une règle stockée dans le dispositif d'aide à la conduite, sont fournies en tant qu'information au réseau neuronal de sélection (5) ;
et en ce que le dispositif d'aide à la conduite (2) est conçu pour adapter le réseau neuronal de sélection (5) au moyen d'un apprentissage par renforcement en fonction de l'information fournie, c'est-à-dire en fonction de la valeur de récompense ($r_t$) et de la seconde information d'environnement ($s_{t+1}$).

12. Véhicule automobile (1) comprenant un dispositif d'aide à la conduite (2) selon la revendication 11.

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017140270 A1

**In der Beschreibung aufgeführte Nicht-Patentliteratur**

- **VON PETER ONDRÚŜKA ; INGMAR POSNER.** Deep Tracking: Seeing Beyond Seeing Using Recurrent Neural Networks. Mobile Robotics Group, University of Oxford

- **RONALD J. WILLIAMS.** Simple Statistical Gradient-Following Algorithms for Connectionist Reinforcement Learning. *Zeitschrift Machine Learning,* 1992, vol. 8, 229-256
- **WOLODIMIR MNIH et al.** Asynchronous Methods for Deep Reinforcement Learning. *Internationalen Konferenz zum Maschinenlernen,* 2016, vol. 33